# EUROPÄISCHE PATENTSCHRIFT

(11) **EP 0 770 010 B1**
(45) Veröffentlichungstag und Bekanntmachung des Hinweises auf die Patenterteilung: **07.07.1999**
(21) Anmeldenummer: 96909057.0
(22) Anmeldetag: 17.04.1996
(51) Int. Cl.: B60S 1/08

(54) **VORRICHTUNG ZUM BETREIBEN EINES SCHEIBENWISCHERS**
DEVICE FOR OPERATING A WINDSCREEN WIPER
DISPOSITIF POUR ACTIONNER UN ESSUIE-GLACE

(30) Priorität: 27.05.1995 DE 19519485
(43) Veröffentlichungstag der Anmeldung: 02.05.1997
(73) Patentinhaber: ROBERT BOSCH GMBH, 70442 Stuttgart (DE)
(72) Erfinder: PIENTKA, Rainer, D-77855 Achern (DE); BLITZKE, Henry, D-77815 Buehl (DE); BUERKLE, Joerg, D-77654 Offenburg (DE)
(86) Internationale Anmeldenummer: DE9600668
(87) Internationale Veröffentlichungsnummer: WO9637388

(56) Entgegenhaltungen:
- WO-A-92/18358
- DE-A- 4 018 903
- DE-A- 4 403 661

## Beschreibung

### Stand der Technik

Die Erfindung bezieht sich auf eine Vorrichtung zum Betreiben eines Scheibenwischers in einem Direktbetrieb, bei dem bei einem Benetzungsereignis der Schei be unmittelbar ein Wischvorgang ausgelöst wird, in einem Intervallbetrieb, bei dem bei einem entsprechenden Benetzungsereignis eine Folge von Wischvorgängen mit vorgebbarer Intervallzeit ausgelöst wird, oder in einem Dauerbetrieb, bei dem Wischvorgange ohne Pause aufeinanderfolgen, mit einer Sensoreinrichtung zum Erfassen des Benetzungszustandes der Scheibe und Abgeben eines Sensorsignals, mit einer das Sensorsignal aufnehmenden Auswerteeinrichtung, die eine Benetzungsdetektorstufe, eine Intervallzeitsteuerung und eine Steuersignalerzeugungseinrichtung aufweist, und mit einer Ansteuereinheit für den Scheibenwischer, die von der Auswerteeinrichtung zum Erzeugen der Wischvorgänge ansteuerbar ist.

Eine Vorrichtung dieser Art ist in der DE 40 18 903 C2 als bekannt ausgewiesen. Bei dieser bekannten Vorrichtung wird der Wischbetrieb auf der Grundlage eines Sensorsignals einer Sensoreinrichtung gesteuert, das von einer Auswerteeinrichtung bewertet wird. Es ist ein Intervallbetrieb vorgesehen, wobei die Intervalle zum einen in Abhängigkeit von Benetzungsereignissen einschließlich Regen oder anderem Feuchtigkeitsbelag auf der Scheibe sowie in Abhängigkeit von vorangehenden Intervallzeiten sowie der Dauer von ausgelösten Wischvorgängen wählbar ist. Hierbei können ungünstige sprunghafte Änderungen der Intervallzeiten auftreten.

### Vorteile der Erfindung

Der Erfindung liegt die Aufgabe zugrunde, eine Vorrichtung der eingangs genannten Art bereitzustellen, bei der auf einfache Weise eine Glättung der Intervallzeiten erzielt wird.

Diese Aufgabe wird mit den im Patentanspruch 1 angegebenen Merkmalen gelöst.

Hiernach ist also vorgesehen, daß die Intervallzeitsteuerung eine Glättungsstufe für die Intervallzeit aufweist, mit der feststellbar ist, in welchen von vorgegebenen Zeitabschnitten innerhalb der Intervallzeit ein Benetzungsereignis seit Intervallbeginn fällt, und mit der die zweite Intervallzeit umso mehr verkürzbar ist, je früher der Zeitabschnitt liegt, in den das Benetzungsereignis fällt.

Auf diese Weise werden große sprungartige Veränderungn der Intervallzeiten bei aufeinanderfolgenden Wischvorgängen vermieden, die für einen Fahrer störend wirken können.

Eine einfache Maßnahme zum Erreichen einer guten Glättung der Intervallzeiten besteht darin, daß die Intervallzeit in zwei gleich große Zeitabschnitte aufgeteilt ist, und daß die zweite Intervallzeit gleich der alten bleibt, wenn das Benetzungsereignis in den zweiten Zeitabschnitt fällt, und um einen festen Anteil der alten Intervallzeit herabgesetzt wird, wenn das Benetzungsereignis in den ersten Zeitabschnitt fällt.

Weiterhin werden störende sprungartige Änderungen der Intervallzeit vermieden, wenn vorgesehen ist, daß die Intervallzeit einer auf die zweite Intervallzeit weiterhin folgenden dritten Intervallzeit um einen größeren prozentualen Anteil verkürzt ist als die zweite Intervallzeit , wenn ein Benetzungsereignis in deren ersten Zeitabschnitt auftritt, und daß weitere Intervallzeiten um den gleichen prozentualen Anteil verkürzt sind wie die dritte Intervallzeit, wenn Benetzungsereignisse in den ersten Zeitabschnitt der jeweils vorangehenden Intervallzeiten fallen.

Eine weitere einfache Maßnahme zum Verbessern der Glättung besteht darin, daß die zweite Intervallzeit gleich bleibt, wenn ein Benetzungsereignis außerhalb der ersten Intervallzeit auftritt, daß die dritte Intervallzeit um einen vorgegebenen prozentualen Anteil verlängert ist, wenn ein Benetzungsereignis außerhalb der dritten Intervallzeit auftritt, daß eine vierte Intervallzeit um einen größeren prozentualen Anteil verlängert ist als die dritte Intervallzeit, wenn ein Benetzungsereignis außerhalb der dritten Intervallzeit auftritt, und daß in den Direktbetrieb geschaltet wird, wenn ein Benetzungsereignis außerhalb der vierten Intervallzeit auftritt.

Eine Ausbildung der Vorrichtung derart, daß in den Direktbetrieb nur schaltbar ist, wenn nach einer letzten Intervallzeit eine weitere Intervallzeit verstrichen ist, verhindert, daß ein Doppelwischen beim Übergang aus dem Intervallbetrieb in den Direktbetrieb stattfindet.

Eine weitere vorteilhafte Maßnahme zum Verbessern der Glättung der Intervallzeiten ergibt die Ausgestaltung der Vorrichtung derart, daß der erste Zeitab schnitt wiederum in zwei gleich große Zeitbereiche unterteilt ist, und daß der prozentuale Anteil der Verkürzung der anschließenden Intervallzeit stärker ist, wenn das Benetzungsereignis in den ersten Zeitbereich fällt als wenn es in den zweiten Zeitbereich fällt.

Um den Intervallbetrieb eindeutig zu definieren, ist ferner vorgesehen, daß sich die Intervallzeiten innerhalb einer minimalen und einer maximalen Grenze bewegen, und daß bei Unterschreiten der minimalen Grenze in den Dauerbetrieb und bei Überschreiten der maximalen Grenze in den Direktbetrieb umschaltbar ist.

Ein Übergang in den Intervallbetrieb wird einfach und zuverlässig dadurch erreicht, daß der Intervallbetrieb nur aus dem Direktbetrieb erreichbar ist, und daß die erste Intervallzeit aus dem Mittelwert der beiden vorangehenden Pausenzeiten des Direktbetriebs ermittelt ist, wenn keine der beiden Zeiten größer als die maximale Grenze der Intervallzeit ist.

Die Erfindung wird nachfolgend anhand eines Ausführungsbeispiels unter Bezugnahme auf die Zeichnungen näher erläutert. Es zeigen:
- Fig. 1: eine Vorrichtung zum Betreiben eines Scheibenwischers in schematischer Blockdarstellung,
- Fig. 2: eine Darstellung von Intervallzeiten zum Erläutern der Arbeitsweise der Vorrichtung und
- Fig. 3: wesentliche Abschnitte einer in Figur 1 gezeigten Auswerteeinrichtung.

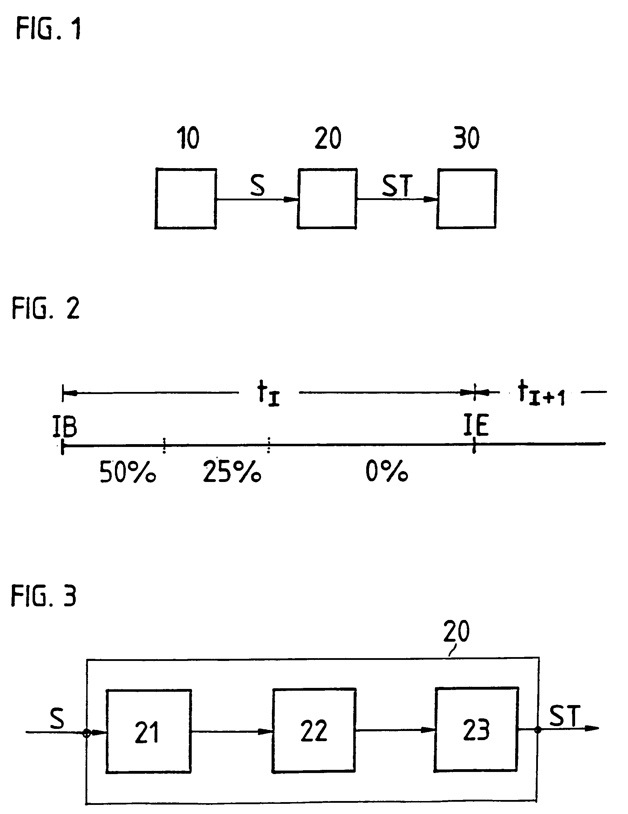

Die Figur 1 zeigt eine Vorrichtung zum Betreiben eines Scheibenwischers mit einer Sensoreinrichtung 10, die ein Sensorsignal S, das schon vorverarbeitet sein kann, an eine Auswerteeinrichtung 20 abgibt. Die Auswerteeinrichtung 20 erzeugt ein Steuersignal ST, mit dem über eine Ansteuereinheit 30 ein gemäß der Auswertung des Sensorsignals S angemessener Wischbetrieb auslösbar ist.

Üblicherweise sind bei einer solchen Vorrichtung ein Direktbetrieb, bei dem bei gelegentlich auftretenden Benetzungsereignissen, wie Regen, Schnee oder feuchtem Schmutz, erforderlichenfalls Wischvorgänge ausgelöst werden, zwischen denen in der Regel unterschiedlich lange Wischpausen liegen. Bei anderen Benetzungsereignissen, wie Nieselregen oder einem Zusetzen der Scheibe durch feine Regentröpfchen bei Nebel, wird ein Intervallbetrieb ausgelöst, während zum Beispiel bei normalem Regen ein Dauerbetrieb (ohne Wischpausen) eingeschaltet wird.

Im Intervallbetrieb sind innerhalb einer minimalen Intervallzeit und einer maximalen Intervallzeit je nach Benetzungsereignis mittels der Auswerteeinrichtung 20 unterschiedliche Intervallzeiten t_{I+1} usw. wählbar. Sprungartige Änderungen der Intervallzeiten können für einen Fahrer störend wirken. Vorliegend wird gemäß den Figuren 2 und 3 eine Glättung bei sich ändernden Intervallzeiten vorgenommen.

Hierzu wird gemäß Figur 2 eine Intervallzeit t_{I} zwischen einem Intervallbeginn IB und einem Intervallende IE in zwei gleich große Zeitabschnitte unterteilt. Der erste Zeitabschnitt kann weiterhin in zwei gleich große Zeitbereiche unterteilt sein, wie in Figur 2 dargestellt. In Figur 3 sind die wesentlichen Auswertestufen der Auswerteeinrichtung 20 in einem Blockschaltbild gezeigt.

Fällt ein Benetzungsereignis, das mittels einer Detektorstufe 21 erfaßt wird, in den zweiten Zeitabschnitt, so bleibt die darauf folgende zweite Intervallzeit T_{I+1} gegenüber der alten ersten Intervallzeit t_{I} unverändert. Fällt ein Benetzungsereignis in den zweiten Zeitbereich des ersten Zeitabschnitts, so wird die zweite Intervallzeit t_{I+1} gegenüber der ersten Intervallzeit t_{I} um 25 % verkürzt, während die zweite Intervallzeit t_{I+1} um 50 % verkürzt wird, wenn das Benetzungsereignis in den ersten Zeitbereich des ersten Zeitabschnitts fällt. Mittels einer Intervallzeitsteuerung 22 wird dementsprechend eine Information an eine Steuersignalerzeugungseinrichtung 23 abgegeben.

Weiterhin kann die Intervallzeitsteuerung 22 derart ausgebildet sein, daß nach einer ersten Verkürzung der Intervallzeit eine unmittelbar anschließende weitere Verkürzung stärker ausfällt, wenn ein Benetzungsereignis in den gleichen Zeitbereich fällt. Wird beispielsweise die zweite Intervallzeit t_{I+1} um 25 % verkürzt, weil ein Benetzungsereignis in den zweiten Zeitbereich des ersten Zeitabschnitts fällt, so wird eine dritte Intervallzeit beispielsweise um 50 % verkürzt, wenn ein Bentzungsereignis in den zweiten Zeitbereich des ersten Zeitabschnitts der zweiten Intervallzeit t_{I+1} fällt. Jede weitere Intervallzeit wird bei einem Benetzungsereignis in dem entsprechenden Zeitbereich jeweils um weitere 50 % gegenüber dem vorhergehenden Zeitintervall verkürzt.

Tritt ein Benetzungsereignis beispielsweise außerhalb der ersten Intervallzeit t_{I} auf, so bleibt die Dauer der folgenden zweiten Intervallzeit t_{I+1} beispielsweise unverändert, während bei einer darauf folgenden Verlängerung die dritte Intervallzeit gegenüber der zweiten um zum Beispiel 25 % und bei einer dritten Verlängerung die vierte Intervallzeit gegenüber der Dritten um 50 % vergrößert wird. Bei weiterer Verlängerung wird dann vorzugsweise in den Direktbetrieb umgeschaltet.

Ein Übergang in den Direktbetrieb könnte - wegen der unmittelbaren Reaktion des Direktbetriebs auf ein Benetzungsereignis - bei Eintreffen eines Benetzungs-ereignisses nach einem letzten Wischvorgang im Intervallbetrieb ungünstiger-weise gleich wieder einen Wischvorgang hervorrufen, so daß vorgesehen ist, daß in den Direktbetrieb erst nach einer weiteren Intervallzeit umschaltbar ist.

Wie bereits erwähnt, kann der Intervallbetrieb nur von dem Direktbetrieb aus erreicht werden. Die erste Intervallzeit berechnet sich dann aus dem Mittelwert der letzten beiden Pausenzeiten des Direktbetriebs, wobei in den Intervallbetrieb übergegangen wird, wenn die beiden Zeiten nicht größer sind als die maximale Intervallzeit.

Mit den beschriebenen Maßnahmen läßt sich auf einfache Weise ein geglätteter Intervallbetrieb erzielen, wobei aber auf sich ändernde Benetzungssituationen der Wischbetrieb schnell genug anpaßbar ist.

Die Auswerteeinrichtung 20 ist vorzugsweise digital aufgebaut und kann zum Verwirklichen der beschriebenen Maßnahmen die einzelnen Stufen in einem Programm beinhalten.

## Patentansprüche

1. Vorrichtung zum Betreiben eines Scheibenwischers in einem Direktbe_ trieb, bei dem bei einem Benetzungsereignis der Scheibe unmittelbar ein Wischvorgang ausgelöst wird, in einem Intervallbetrieb, bei dem bei einem entsprechenden Benetzungsereignis eine Folge von Wischvorgängen mit vorgebbarer Intervallzeit ausgelöst wird, oder in einem Dauer-betrieb, bei dem Wischvorgänge ohne Pause aufeinanderfolgen, mit einer Sensoreinrichtung zum Erfassen des Benetzungszustandes der Scheibe und Abgeben eines Sensorsignals, mit einer das Sensorsignal aufnehmen-den Auswerteeinrichtung, die eine Benetzungsdetektorstufe, eine Intervallzeitsteuerung und eine Steuersignalerzeugungseinrichtung aufweist, und mit einer Ansteuereinheit für den Scheibenwischer, die von der Auswerteeinrichtung zum Erzeugen der Wischvorgänge ansteuerbar ist,
dadurch gekennzeichnet,
daß die Intervallzeitsteuerung (22) eine Glättungsstufe bei sich ändenden Intervellzeiten (t_{I}, t_{I+1}) aufweist, mit dar feststellbar ist, in welchen von vorgegebenen Zeitabschnitten innerhalb einer ersten Intervallzeit (t_{I}] ein Benetzungsereignis seit Intervallbeginn (IB) fällt, und mit der eine zweite Intervallzeit (t_{I+1}) um so mehr verkürzbar ist, je früher der Zeitabschnitt liegt, in den das Benetzungsereignis fällt.

2. Vorrichtung nach Anspruch 1,
dadurch gekennzeichnet,
daß die Intervallzeit (t_{I}) in zwei gleich große Zeitabschnitte aufgeteilt ist, und
daß die zweite Intervallzeit (t_{I+1}) gleich der alten bleibt, wenn das Benetzungsereignis in den zweiten Zeitabschnitt der ersten Intervallzeit (t_{I}) fällt, und um einen festen Anteil der alten Intervallzeit (t_{I}) herabgesetzt wird, wenn das Benetzungsereignis in den ersten Zeitabschnitt der erstem Intervallzeit (t_{I}) fällt.

3. Vorrichtung nach Anspruch 1 oder Anspruch 2,
dadurch gekennzeichnet,
daß die Intervallzeit einer auf die zweite Intervallzeit (t_{I+1}) weiterhin folgenden dritten Intervallzeit um einen größeren prozentualen Anteil verkürzt ist als die zweite Intervallzeit (t_{I+1}), wenn ein Benetzungsereignis in dem ersten Zeitabschnitt der zweiten Intervallzeit (t_{I+1}) auftritt, und
daß weitere Intervallzeiten um den gleichen prozentualen Anteil verkürzt sind wie die dritte Intervallzeit, wenn Benetzungsereignisse in den ersten Zeitabschnitt der jeweils vorangehenden Intervallzeiten fallen.

4. Vorrichtung nach einem der Ansprüche 1 oder 3,
dadurch gekennzeichent,
daß die zweite Intervallzeit (t_{I+1}) gleich bleibt, wenn ein Benetzungsereignis außerhalb der ersten Intervallzeit (t_{I}) auftritt,
daß die dritte Intervallzeit um einen vorgegebenen prozentualen Anteil verlängert ist, wenn ein Benetzungsereignis außerhalb der dritten Intervallzeit auftritt,
daß eine vierte Intervallzeit um einen größeren prozentualen Anteil verlängert ist als die dritte Intervallzeit, wenn ein Benetzungsereignis außer-halb der dritten Intervallzeit auftritt, und
daß in den Direktbetrieb geschaltet wird, wenn ein Benetzungsereignis außerhalb der vierten Intervallzeit auftritt.

5. Vorrichtung nach einem der vorhergehenden Ansprüche,
dadurch gekennzeichent,
daß in den Direktbetrieb nur schaltbar ist, wenn nach einer letzten Intervallzeit eine weitere Intervallzeit verstrichen ist.

6. Vorrichtung nach einem der Ansprüche 2, 3 oder 5,
dadurch gekennzeichnet,
daß der erste Zeitabschnitt wiederum in zwei gleich große Zeitbereiche unterteilt ist, und
daß der prozentuale Anteil der Verkürzung der anschließenden Intervallzeit stärker ist, wenn das Benetzungsereignis in den ersten Zeitbereich fällt als wenn es in den zweiten Zeitbereich fällt.

7. Vorrichtung nach einem der vorhergehenden Ansprüche,
dadurch gekennzeichent,
daß sich die Intervallzeiten innerhalb einer minimalen und einer maximalen Grenze bewegen, und
daß bei Unterschreiten der minimalen Grenze in den Dauerbetrieb und bei Überschreiten der maximalen Grenze in den Direktbetrieb umschaltbar ist.

8. Vorrichtung nach einem der vorhergehenden Asprüche,
dadurch gekennzeichnet,
daß der Intervallbetrieb nur aus dem Direktbetrieb erreichbar ist, daß die erste Intervallzeit (t_{I}) aus dem Mittelwert der beiden vorangehenden Pausenzeiten des Direktbetriebs ermittelt ist, wenn keine der beiden Zeiten größer als die maximale Grenze der Intervallzeit ist.

## Claims

1. Device for operating a windscreen wiper in a direct mode in which a wiping process is immediately triggered in the case of a wetting event of the windscreen, in an interval mode in which a sequence of wiping processes with a predefinable interval time is triggered in the case of a corresponding wetting event, or in a continuous mode in which wiping processes succeed one another without a pause, having a sensor device for sensing the state of wetness of the windscreen and emitting a sensor signal, having an evaluation device which receives the sensor signal and which has a wetting detector stage, an interval time controller and a control signal generating device, and having a driving unit for the windscreen wiper, which unit can be driven by the evaluation device in order to generate wiping processes, characterized in that the interval time controller (22) has a smoothing stage when the interval times (t_{I}, t_{I+1}) change, with which stage it is possible to determine in which of the predefined time periods within a first interval time (t_{I}) a wetting event occurs since the start (IB) of the interval, and with which a second interval time (t_{I+1}) can be shortened to a greater extent in direct proportion to how early the time period is in which the wetting event occurs.

2. Device according to Claim 1, characterized in that the interval time (t_{I}) is divided into two equally long time periods, and in that the second interval time (t_{I+1}) is equal to the old one if the wetting event occurs in the second time period of the first interval time (t_{I}), and is reduced by a fixed proportion of the old interval time (t_{I}) if the wetting event occurs in the first time period of the first interval time (t_{I}).

3. Device according to Claim 1 or Claim 2, characterized in that the interval time of a third interval time which follows on after the second interval time (t_{I+1}) is shortened by a greater percentage than the second interval time (t_{I+1}) if a wetting event occurs in the first time period of the second interval time (t_{I+1}), and in that further interval times are shortened by the same percentage as the third interval time if wetting events occur in the first time period of the respectively preceding interval times.

4. Device according to one of Claims 1 or 3, characterized in that the second interval time (t_{I+1}) remains the same if a wetting event occurs outside the first interval time (t_{I}), in that the third interval time is prolonged by a predefined percentage if a wetting event occurs outside the third interval time, in that a fourth interval time is prolonged by a greater percentage than the third interval time if a wetting event occurs outside the third interval time, and in that the system is switched to the direct mode if a wetting event occurs outside the fourth interval time.

5. Device according to one of the preceding claims, characterized in that the system can only be switched to the direct mode if a further interval time has passed after a last interval time.

6. Device according to one of Claims 2, 3 or 5, characterized in that the first time period is in turn divided into two equally large time ranges, and in that the percentage of the shortening of the subsequent interval time is greater if the wetting event occurs in the first time range than if it occurs in the second time range.

7. Device according to one of the preceding claims, characterized in that the interval times move within a minimum limit and a maximum limit, and in that when the times drop below the minimum limit the system is switched into the continuous mode, and when the times exceed the maximum limit is switched into the direct mode.

8. Device according to one of the preceding claims, characterized in that the interval time can be reached only from the direct mode, in that the first interval time (t_{I}) is determined from the average value of the two preceding pause times of the direct mode if none of the two times is longer than the maximum limit of the interval time.

## Revendications

1. Dispositif servant à faire fonctionner un essuie-glace dans une marche en direct, dans laquelle lors d'un phénomène de mouillage de la glace on déclenche immédiatement un processus d'essuyage, dans un fonctionnement intermittent, lors duquel il est déclenché lors d'un phénomène de mouillage correspondant une série de processus d'essuyage avec des durées d'intervalles de temps que l'on peut définir au préalable, ou en fonctionnement permanent, dans le-quel les processus d'essuyage se suivent les uns les autres sans pause, dispositif qui comprend un système de détection servant à détecter l'état de mouillage de la glace et à délivrer un signal de détection, un système d'exploitation qui reçoit le signal de détection, et qui présente un étage de détection du mouillage, une commande de la durée de l'intervalle et un système de production de signaux de commande, et une unité de mise en marche de l'essuie-glace qui peut être commandée par le système d'exploitation pour produire les processus d'essuyage,
caractérisé en ce que
la commande de la durée des intervalles (22) présente un étage de lissage dans le cas de durées d'intervalles (t_{I}, t_{I+1}) qui se modifient, étage avec lequel on peut déterminer dans laquelle des sections de temps prédéfinies tombe, à l'intérieur d'une première durée d'intervalle (t_{I}) un phénomène de mouillage depuis le début de l'intervalle (IB), et avec lequel on peut raccourcir une deuxième durée d'intervalle (t_{I+1}) d'autant plus que la section de temps, dans laquelle le phénomène de mouillage tombe, se situe plus tôt.

2. Dispositif selon la revendication 1,
caractérisé en ce que
• la durée d'intervalle (tI+1) est subdivisée en deux sections de temps d'égale grandeur et
• la deuxième durée d'intervalle (t_{I+1}) reste égale à l'ancienne, quand le phénomène de mouillage tombe dans la deuxième section de temps de la première durée d'intervalle (t_{I}), et est réduite d'une fraction fixe de l'ancienne durée d'intervalle (tI), quand le phénomène de mouillage tombe dans la première section de temps.

3. Dispositif selon la revendication 1 ou selon la revendication 2,
caractérisé en ce que
• la durée de l'intervalle d'une troisième durée d'intervalle faisant suite en outre à la deuxième durée d'intervalle (t_{I+1}) est raccourcie d'une fraction plus grande en pourcentage que la deuxième durée d'intervalle (t_{I+1}), quand un phénomène de mouillage se produit dans la première section de temps de la deuxième durée d'intervalle (t_{I+1}), et
• d'autres durées d'intervalles sont raccourcies de la même fraction en pourcentage que la troisième durée d'intervalle, quand des phénomènes de mouillage tombent dans la première section de temps des durées d'intervalles respectivement précédentes.

4. Dispositif selon l'une des revendications 1 ou 3,
caractérisé en ce que
• le deuxième intervalle de temps (t_{I+1}) demeure le même, quand un processus de mouillage survient en dehors de la première durée d'intervalle (t_{I}),
• la troisième durée d'intervalle est prolongée d'une fraction prédéfinie en pourcentage, que la troisième durée d'intervalle, quand un phénomène de mouillage survient en dehors de la troisième durée d'intervalle, et
• on passe en marche en direct, quand un phénomène de mouillage se produit en dehors de la quatrième durée d'intervalle.

5. Dispositif selon l'une des revendications précédentes,
caractérisé en ce qu'
on ne peut passer en marche en direct que quand il s'est écoulé après une dernière durée d'intervalle une autre durée d'intervalle.

6. Dispositif selon l'une des revendications 2, 3 ou 5,
caractérisé en ce que
• la première section de temps est à son tour subdivisée en deux plages de temps d'égale grandeur, et
• la fraction en pourcentage du raccourcissement de la durée d'intervalle suivante est plus forte, quand le phénomène de mouillage tombe dans la première plage de temps, que quand il tombe dans la deuxième plage de temps.

7. Dispositif selon l'une des revendications précédentes,
caractérisé en ce que
• les durées des intervalles se déplacent à l'intérieur d'une limite minimale et d'une limite maximale, et
• en cas de sous-dépassement de la limite minimale on passe en fonctionnement permanent et en cas de dépassement de la limite maximale on passe en fonctionnement en direct.

8. Dispositif selon l'une des revendications précédentes,
caractérisé en ce que
• le fonctionnement intermittent ne peut être obtenu qu'à partir du fonctionnement en direct,
• la première durée d'intervalle (t_{I}) est déterminée à partir de la valeur moyenne des deux temps de pause précédents du fonctionnement en direct, quand aucune des deux durées n'est plus grande que la limite maximale de la durée d'intervalle.
